# FASCICULE DE BREVET EUROPEEN

(11) **EP 1 778 404 B1**
(45) Date de publication et mention de la délivrance du brevet: **20.08.2008**
(21) Numéro de dépôt: 05786146.0
(22) Date de dépôt: 05.07.2005
(51) Int. Cl.: B02C 23/18, C09C 3/04, C09D 7/14, C09D 1/00, C09J 11/04

(54) **PROCEDE DE BROYAGE DE MATIERES MINERALES EN PRESENCE D'EPAISSISSANTS, SUSPENSIONS AQUEUSES OBTENUES ET LEURS UTILISATIONS**
VERFAHREN ZUM MAHLEN VON MINERALMATERIALIEN BEI VORHANDENSEIN VON VERDICKUNGSMITTEL, DARAUS GEWONNENE WÄSSRIGE SUSPENSIONEN UND VERWENDUNG DAFÜR
METHOD FOR GRINDING MINERAL MATERIALS IN THE PRESENCE OF THICKENING AGENTS, RESULTING AQUEOUS SUSPENSIONS AND USES THEREOF

(30) Priorité: 13.07.2004 FR 0407803
(43) Date de publication de la demande: 02.05.2007
(73) Titulaire: COATEX S.A.S., 69730 Genay (FR)
(72) Inventeur: SUAU, Jean-Marc, F-69480 Lucenay (FR); RUHLMANN, Denis, F-69730 Genay (FR); JACQUEMET, Christian, F-69005 Lyon (FR); MONGOIN, Jacques, F-69650 Quincieux (FR)
(74) Mandataire: Richebourg, Michel François
(86) Numéro de dépôt international: PCT/FR2005/001716
(87) Numéro de publication internationale: WO 2006/016037

(56) Documents cités:
- WO-A-93/12184

## Description

La présente invention concerne le domaine des suspensions aqueuses de matières minérales broyées et leurs utilisations dans des formulations aqueuses.

L'invention concerne tout d'abord un procédé de broyage de matières minérales dans l'eau, en présence d'épaississants.

L'invention concerne aussi les suspensions stables de matières minérales broyées dans l'eau et obtenues par le procédé selon l'invention.

L'invention concerne également l'utilisation desdites suspensions dans des formulations aqueuses, en particulier des formulations de revêtements telles que notamment des peintures aqueuses, des crépis, des encres, des enduits, des mastics, des adhésifs, des colles, et d'autres formulations aqueuses incorporant des matières minérales.

L'invention concerne enfin les formulations aqueuses obtenues selon l'invention.

Afin d'adapter la rhéologie de son produit à des conditions de mise en oeuvre aussi diverses que la nature de la surface à recouvrir, les moyens d'application, la quantité de produit à déposer et, indépendamment, pour conférer une bonne stabilité à ce produit, l'homme du métier dispose aujourd'hui d'une très large gamme d'additifs communément dénommés « épaississants ». Ces épaississants développent avec les autres constituants présents dans les formulations de peinture des interactions complexes, qui ont fait l'objet de nombreux travaux depuis plus d'un demi-siècle : l'objectif de ces recherches reste de mieux appréhender le mécanisme de fonctionnement de ces additifs rhéologiques, afin de fournir à l'homme du métier des outils et des règles adaptés au choix du bon épaississant, en fonction de la rhéologie souhaitée et des autres composants présents dans la formulation de peinture.

Au cours de ces travaux, un éclairage tout particulier a été porté aux interactions que peuvent développer les épaississants avec des suspensions aqueuses de charges minérales stabilisées à l'aide de dispersants. Cet intérêt est justifié par le fait que la charge minérale, telle que le dioxyde de titane ou le carbonate de calcium, qui était auparavant apportée sous forme de poudre sèche, l'est désormais sous forme de suspensions aqueuses : en effet, plus simples à l'emploi, celles-ci éliminent les problèmes liés à l'utilisation de matériaux pulvérulents, et facilitent les opérations de manipulation des charges par simple pompage desdites suspensions.

Les interactions entre épaississants et dispersants contenus dans des suspensions aqueuses de matières minérales sont décrites dans le document « Rheology of associative thickener pigment and pigmented commercial latex dispersions » (Progress in Organic Coatings, 17, (1989), pp. 155-173) qui envisage le cas d'une suspension aqueuse de dioxyde de titane, dispersée par de l'acide polyméthacrylique et mise en présence de différents agents épaississants. Il apparaît alors que pour une concentration croissante en dispersant, certains épaississants du type HEUR (Uréthannes éthoxylés et modifiés hydrophobiquement ou Hydrophobe-modified Ethoxylated Urethane) conduisent à une déstabilisation du dioxyde de titane, alors que la stabilité de la suspension est maintenue en présence d'épaississants cellulosiques.

En outre, ces travaux ont aussi démontré que les interactions entre dispersants et épaississants peuvent influencer les propriétés finales du film de peinture telles que la brillance. A ce titre, « Pigment stabilization through mixed associative thickener interactions » (Journal of Coatings Technology, 64, 807, (1992), pp. 53-61) enseigne que l'utilisation d'un épaississant de type HEUR (Uréthannes éthoxylés et modifiés hydrophobiquement ou Hydrophobe-modified Ethoxylated Urethane) en combinaison avec un dispersant qui est un copolymère de l'acide maléïque et de diisobutylène, conduit à une augmentation de la brillance dans le cas de peintures latex. A l'inverse, « Interactions between rheology-modifying and pigment-dispersing agents » (Farbe + Lack, 100, 9, (1994), pp. 759-764) démontre que des formulations de peinture contenant des épaississants de type HEUR (Uréthannes éthoxylés et modifiés hydrophobiquement ou Hydrophobe-modified Ethoxylated Urethane) et des dispersants à caractère fortement ionique peuvent diminuer la brillance du produit final. Les auteurs de ces travaux discutent les combinaisons possibles entre différents dispersants et des épaississants du type HEUR (Uréthannes éthoxylés et modifiés hydrophobiquement ou Hydrophobe-modified Ethoxylated Urethane) et HASE (Emulsions modifiées hydrophobiquement et épaississantes en milieu alcalin ou (Hydrophobically modified Alkali-swellable Emulsions).

En résumé, l'enseignement général de ces documents pour l'homme du métier est que les interactions entre dispersants et épaississants sont complexes, et gouvernent à la fois la stabilité de la peinture formulée, et les propriétés du film de peinture final. Cette situation est résumée par le document « Adsorption studies of associative interactions between thickener and pigment particles» (Progress in organic coatings, 30, (1997), pp. 161-171): l'homme du métier est fortement incité à sélectionner de manière attentive de nouvelles combinaisons dispersants-épaississants pour valoriser leur potentiel (pp 167 introduction), en termes de stabilité de la peinture ainsi fabriquée et de propriétés finales du film de peinture.

De plus, continuant à utiliser des charges minérales sous formes de suspensions aqueuses, l'homme du métier a cherché à développer des produits intermédiaires qui consistent en de simples mélanges de différents constituants de la peinture, la formulation de ladite peinture se résumant ensuite à l'assemblage des différents constituants, par simple mélange. A ce titre, il est connu de fabriquer des suspensions aqueuses de matières minérales contenant de l'eau, une charge minérales, ainsi qu'un agent épaississant. Ces suspensions sont destinées à être ultérieurement mélangées avec les autres constituants habituels d'une peinture pour obtenir le produit final désiré.

Ainsi, l'homme du métier connaît le document US 2002 050228 qui décrit la préparation d'une suspension aqueuse contenant du carbonate de calcium ainsi qu'un pigment tel que le dioxyde de titane. Une telle composition peut également contenir un agent épaississant, et servir à la formulation d'encres et de peintures aqueuses. Il connaît également le document US 6 074 474 qui décrit une suspension aqueuse contenant des particules minérales présentant une répartition granulométrique particulière, et pouvant être du carbonate de calcium. En outre, une telle suspension, peut contenir un agent épaississant et servir par la suite à la formulation de peintures aqueuses.

Le document WO 93/12184 décrit un procédé de fabrication de particules discrètes en suspension, par mélange de deux types de particules insolubles, tout en évitant la formation d'agrégats.
Un facteur-clé résulte du contrôle du potentiel Zéta de chaque suspension formée (page 42), et une méthode privilégiée consiste à broyer en milieu aqueux les particules insolubles du 1 er et 2ème type.

L'homme de métier pourra aussi se référer utilement aux documents de portée générale cités comme art antérieur dans ce document WO 93/12184.

Nous indiquons ci-dessous par commodité la liste des documents antérieurs qui sont cités respectivement dans le document précité :
U.S. Patent 2 930 775 ; U.S. Patent 4 243 430 ; T.C. Patton, Paint Flow and Pigment Dispersion (Wiley Interscience, 2nd édition) (1979) ; Treatise on Coatings, Vol. III, Part 1 (Marcel Decker) (1975) ; Pigment Handbook, Vol. I (2nd édition, Wiley Interscience) (1988) ; Pigment Handbook, Vol. III (Wiley Interscience) (1973) ; Burlamacchi, et al., Colloids and Surfaces 7, 165 (1982) ; U.S. Patent 4 608 401 ; U.S. Patent 4 025 483 ; U.S. Patent 4 315 959 ; P. Godard et al. Double Liaison, No 387-388, p. Il (1988) ; U.S. Patent 4 800 103 ; U.S. Patent 4 421 660 ; U.S. Patent 4 798 854 ; R. Buscall, et al., Polymer Colloids (Elsevier Applied Science Publications 1985) .

L'homme du métier pourra aussi se référer utilement à l'art antérieur cité dans une demande du même Demandeur : WO 2006/016036 soit:
WO 93/12183 ; WO 93/11183 ; WO 95/31507.

Aussi, poursuivant ses recherches en vue de réaliser des suspensions stables de matières minérales en présence d'agents épaississants, tout en éliminant l'emploi d'agents dispersants qui peuvent conduire à des effets néfastes au niveau de la rhéologie du produit final (par interaction avec les épaississants), la Demanderesse a-telle trouvé de manière surprenante un nouveau procédé de fabrication d'une suspension aqueuse de charges minérales, caractérisé en ce que lesdites charges minérales sont broyées dans l'eau en présence d'agents épaississants. Le produit ainsi obtenu présente une stabilité tout à fait compatible avec son utilisation dans des formulations aqueuses.

A ce stade, la Demanderesse tient à souligner que la présente invention se distingue de l'art antérieur précédemment cité par le fait que ledit art antérieur ne révèle ni n'enseigne le procédé de broyage conduisant à la diminution de la taille des particules minérales.

De plus, la suspension ainsi fabriquée répond au souhait de l'homme du métier, en ce sens qu'elle lui fournit un produit qui contient déjà une partie de l'épaississant utilisé dans la peinture. D'autre part, et de manière tout à fait surprenante, lesdits épaississants ne sont pas dégradés au cours du procédé de broyage, et remplissent précisément à ce stade de la fabrication la fonction d'agents d'aide au broyage, permettant ainsi la diminution de la consommation d'agents d'aide au broyage : la Demanderesse a en effet observé une réduction notable de la taille des particules de matière minérale. Or, il est bien connu que la possibilité de choisir la taille des particules minérales, dans le cadre de la formulation d'une peinture, est d'une grande importance pour l'homme du métier. En effet, la taille des particules influence grandement les propriétés mécaniques et optiques du film final, tel qu'enseigné dans « Particle-size distribution of fillers and their importance in the préparation of paints » (Deutsche Farben-Zeitschrift, 20 (12), 1966, pp. 565-567). Par ailleurs, le procédé selon l'invention permet l'utilisation d'une très large gamme d'épaississants pour peintures, disponibles commercialement.
Le procédé selon l'invention permet d'obtenir également des suspensions aqueuses de matières minérales, qui lors de leurs mises en oeuvre dans les formulations de peinture, permettent d'aboutir à des formulations de peinture possédant un comportement rhéologique amélioré par rapport à celles de l'art antérieur, notamment en présentant des viscosités ICI et Stormer augmentées.

Ce comportement rhéologique amélioré présente également l'avantage d'aboutir à une meilleure qualité d'application de la peinture.

Enfin, les propriétés de l'épaississant en tant que tel sont conservées, puisque les propriétés optiques du film de peinture réalisé selon l'invention ne sont pas dégradées, tout comme les propriétés de compatibilité pigmentaire des peintures ainsi formulées.

L'invention permet donc d'obtenir des formulations aqueuses de peinture stables dans le temps, sans utiliser des agents dispersants. En outre, l'invention permet d'obtenir un produit intermédiaire sous forme d'une suspension aqueuse de matières minérales et d'épaississants, ces derniers jouant également le rôle d'agents d'aide au broyage. A cet égard, au cours de ce procédé, on peut continuer à utiliser des agents d'aide au broyage « classiques ». Enfin, la suspension aqueuse ainsi obtenue par broyage de matières minérales dans l'eau en présence d'épaississants présente une stabilité tout à fait compatible avec son emploi dans la formulation de peintures aqueuses.

L'objet de l'invention est donc un procédé de broyage de matières minérales dans l'eau, en présence d'épaississants.

Un autre objet de l'invention réside dans les suspensions stables de matières minérales broyées dans l'eau et obtenues selon ledit procédé.

Un autre objet de l'invention est l'utilisation desdites suspensions dans des formulations aqueuses, en particulier des formulations de revêtements telles que notamment des peintures aqueuses, des crépis, des encres, des enduits, des mastics, des adhésifs, des colles, et d'autres formulations aqueuses incorporant des matières minérales.

Un dernier objet de l'invention réside dans les formulations aqueuses obtenues selon l'invention.

Le procédé selon l'invention permet donc d'obtenir des suspensions aqueuses de matières minérales, sans utiliser d'agents dispersants, et présentant une rhéologie compatible avec leur utilisation dans des formulations aqueuses.

De plus, le procédé selon l'invention permet d'obtenir également des suspensions aqueuses de matières minérales qui, lors de leur mise en oeuvre dans les formulations de peinture, permettent d'aboutir à des formulations de peinture possédant un comportement rhéologique amélioré par rapport à celles de l'art antérieur, notamment en présentant des viscosités ICI et Stormer augmentées.

Ce procédé permet également de fabriquer des produits répondant à l'attente de l'homme du métier : ils contiennent de l'eau, une ou plusieurs charges minérales, et au moins un épaississant.
Il permet aussi d'ajuster la finesse des matières minérales utilisées en les broyant en présence d'épaississants ceux-ci remplissent à ce titre la fonction d'agents d'aide au broyage.

Par ailleurs, les épaississants ne sont pas dégradés au cours du procédé de broyage, et les propriétés optiques du film de peinture ne sont pas altérées, de même que les propriétés de compatibilité pigmentaire des peintures ainsi formulées.
Enfin, les suspensions aqueuses de matières minérales ainsi broyées et stables dans le temps, servent à la formulation de peintures aqueuses qui présentent une très bonne stabilité, et un comportement rhéologique amélioré.

Ces buts sont atteints grâce à un procédé de fabrication d'une suspension stable de matières minérales dans l'eau, caractérisé en ce que lesdites matières minérales sont broyées en présence d'épaississants.

Le procédé est défini par les revendications 1 à 10.

La Demanderesse tient à préciser que l'opération de broyage de la substance minérale à affiner consiste à broyer la substance minérale avec un corps broyant en particules très fines dans un milieu aqueux contenant les épaississants.

Ainsi, à la suspension aqueuse de la substance minérale à broyer, on ajoute les épaississants et le corps broyant de granulométrie avantageusement comprise entre 0,20 et 4 millimètres. Le corps broyant se présente en général sous la forme de particules de matériaux aussi divers que l'oxyde de silicium, l'oxyde d'aluminium, l'oxyde de zirconium ou de leurs mélanges, ainsi que les résines synthétiques de haute dureté, les aciers, ou autres. Un exemple de composition de tels corps broyants est donné par le brevet FR 2 203 681 qui décrit des éléments broyants formés 30 % à 70 % en poids d'oxyde de zirconium, 0,1 % à 5 % d'oxyde d'aluminium et de 5 à 20 % d'oxyde de silicium.

Le corps broyant est de préférence ajouté à la suspension en une quantité telle que le rapport en poids entre ce matériau de broyage et la substance minérale à broyer soit d'au moins 2/1, ce rapport étant de préférence compris entre les limites 3/1 et 5/1.

Le mélange de la suspension et du corps broyant est alors soumis à l'action mécanique de brassage, telle que celle qui se produit dans un broyeur classique à micro-éléments. Le temps nécessaire pour aboutir à la finesse souhaitée de la substance minérale après broyage sera défini par le fabricant de suspensions de matières minérales selon la nature et la quantité des substances minérales à broyer, et selon le mode d'agitation utilisé et la température du milieu pendant l'opération de broyage.

Une autre variante du procédé se caractérise en ce que ledit procédé met en oeuvre au moins un agent d'aide au broyage. Ledit agent sera choisi par le fabricant de suspensions de matières minérales parmi tous les agents d'aide au broyage bien connus de lui, et leurs mélanges.

Le procédé selon l'invention est caractérisé en ce que les matières minérales sont un pigment et/ou une charge minérale choisi parmi le carbonate de calcium synthétique ou naturel, les dolomies, le kaolin, le talc, le gypse, la chaux, la magnésie, le dioxyde de titane, le blanc satin, le trioxyde d'aluminium ou encore le trihydroxyde d'aluminium, le mica, les oxydes de zinc et de fer, le sulfate de baryum et le mélange de ces charges entre elles, comme les mélanges talc-carbonate de calcium, carbonate de calcium kaolin, ou encore les mélanges de carbonate de calcium avec le trihydroxyde d'aluminium ou le trioxyde d'aluminium, ou encore les mélanges avec des fibres synthétiques ou naturelles ou encore les co-structures des minéraux comme les co-structures talc-carbonate de calcium ou talc-dioxyde de titane, ou leurs mélanges.

De manière préférentielle, les matières minérales sont du carbonate de calcium synthétique ou naturel, du dioxyde de titane, ou leurs mélanges. De manière plus préférentielle, les matières minérales sont un carbonate de calcium synthétique ou un carbonate de calcium naturel choisi parmi le marbre, la calcite, la craie ou leurs mélanges.
Le procédé selon l'invention est également caractérisé en ce que les épaississants sont choisis parmi les épaississants naturels, tels que les gommes naturelles, les CMC (Carboxyméthylcelluloses) et les HEC (Hydroxyéthylcelluloses) ou les épaississants synthétiques, tels que les gommes synthétiques, les épaississants acryliques de type HASE (Emulsions modifiées hydrophobiquement et épaississantes en milieu alcalin ou Hydrophobically modified Alkali-swellable Emulsions) ou ASE (Emulsions épaississantes en milieu alcalin ou Alkali Soluble Emulsions), polyuréthanes, polyéthers, polyesters ou, à base de PVP (polyvinylpyrrolidone).

De manière préférentielle, les épaississants sont choisis parmi les épaississants acryliques de type HASE (Emulsions modifiées hydrophobiquement et épaississantes en milieu alcalin ou Hydrophobically modified Alkali-swellable Emulsions) et les épaississants polyuréthanes.
Le procédé selon l'invention se caractérise aussi en ce que l'on met en oeuvre au moins 15 % en poids sec de matières minérales par rapport au poids total de la suspension aqueuse, de 0,01 % à 5 % en poids sec d'agents épaississants par rapport au poids total de la suspension aqueuse, et de 0 à 5 % en poids sec d'agents d'aide au broyage par rapport au poids total de la suspension aqueuse.

De manière préférentielle, ledit procédé se caractérise en ce que l'on met en oeuvre au moins 30 % en poids sec de matières minérales par rapport au poids total de la suspension aqueuse, de 0,5 % à 1,5 % en poids sec d'agents épaississants par rapport au poids total de la suspension aqueuse, et de 0 à 2 % en poids sec d'agents d'aide au broyage par rapport au poids total de la suspension aqueuse.

De manière encore plus préférentielle, ledit procédé se caractérise en ce que l'on met en oeuvre au moins 50 % en poids sec de matières minérales par rapport au poids total de la suspension aqueuse, de 0,5 % à 1,5 % en poids sec d'agents épaississants par rapport au poids total de la suspension aqueuse, et aucun agent d'aide au broyage.

Un autre objet de l'invention réside dans les suspensions aqueuses de matières minérales broyées en présence d'agents épaississants obtenues par le procédé selon l'invention, et caractérisées en ce qu'elles contiennent au moins 15 % en poids sec de matières minérales par rapport au poids total de la suspension aqueuse, de 0,01 % à 5 % en poids sec d'agents épaississants par rapport au poids total de la suspension aqueuse, et de 0 à 5 % en poids sec d'agents d'aide au broyage par rapport au poids total de la suspension aqueuse.

De manière préférentielle, lesdites suspensions de matières minérales se caractérisent en ce qu'elles contiennent au moins 30 % en poids sec de matières minérales par rapport au poids total de la suspension aqueuse, de 0,5 % à 1,5 % en poids sec d'agents épaississants par rapport au poids total de la suspension aqueuse, et de 0 à 2 % en poids sec d'agents d'aide au broyage par rapport au poids total de la suspension aqueuse.

De manière encore plus préférentielle, lesdites suspensions de matières minérales se caractérisent en ce qu'elles contiennent au moins 50 % en poids sec de matières minérales par rapport au poids total de la suspension aqueuse, de 0,5 % à 1,5 % en poids sec d'agents épaississants par rapport au poids total de la suspension aqueuse, et aucun agent d'aide au broyage.

Les suspensions aqueuses de matières minérales obtenues par le procédé selon l'invention se caractérisent également en ce qu'elles présentent une granulométrie telle qu'au moins 50 % des particules de matières minérales ont un diamètre inférieur ou égal à 30 µm, c'est-à-dire un diamètre médian d₅₀ inférieur ou égal à 30 µm.
Dans l'intégralité de la présente demande, on détermine la granulométrie des suspensions à l'aide d'un granulomètre Mastersizer^{™} 2000 de la société MALVERN^{™}.

De manière préférentielle, les suspensions aqueuses de matières minérales obtenues par le procédé selon l'invention se caractérisent également en ce qu'elles présentent une granulométrie telle qu'au moins 50 % des particules de matières minérales ont un diamètre inférieur ou égal à 15 µm.

De manière encore plus préférentielle, les suspensions aqueuses de matières minérales obtenues par le procédé selon l'invention se caractérisent également en ce qu'elles présentent une granulométrie telle qu'au moins 50 % des particules de matières minérales ont un diamètre inférieur ou égal à 10 µm.

Enfin, de manière extrêmement préférentielle, les suspensions aqueuses de matières minérales obtenues par le procédé selon l'invention se caractérisent également en ce qu'elles présentent une granulométrie telle qu'au moins 50 % des particules de matières minérales ont un diamètre inférieur ou égal à 5 µm.

Lesdites suspensions aqueuses se caractérisent également en ce que les matières minérales sont un pigment et/ou une charge minérale choisi parmi le carbonate de calcium synthétique ou naturel, les dolomies, le kaolin, le talc, le gypse, la chaux, la magnésie, le dioxyde de titane, le blanc satin, le trioxyde d'aluminium ou encore le trihydroxyde d'aluminium, le mica, les oxydes de zinc et de fer, le sulfate de baryum et le mélange de ces charges entre elles, comme les mélanges talc-carbonate de calcium, carbonate de calcium-kaolin, ou encore les mélanges de carbonate de calcium avec le trihydroxyde d'aluminium ou le trioxyde d'aluminium, ou encore les mélanges avec des fibres synthétiques ou naturelles ou encore les co-structures des minéraux comme les co-structures talc-carbonate de calcium ou talc-dioxyde de titane, ou leurs mélanges.

De manière préférentielle, les matières minérales sont du carbonate de calcium synthétique ou naturel, du dioxyde de titane, ou leurs mélanges.

De manière plus préférentielle, les matières minérales sont un carbonate de calcium synthétique ou un carbonate de calcium naturel choisi parmi le marbre, la calcite, la craie ou leurs mélanges.

Les suspensions aqueuses de matières minérales selon l'invention sont aussi caractérisées en ce que les épaississants sont choisis parmi les épaississants naturels, tels que les gommes naturelles, les CMC (Carboxyméthylcelluloses) et les HEC (Hydroxyéthylcelluloses) ou les épaississants synthétiques, tels que les gommes synthétiques, les épaississants acryliques de type HASE (Emulsions modifiées hydrophobiquement et épaississantes en milieu alcalin ou Hydrophobically modified Alkali-swellable Emulsions) ou ASE (Emulsions épaississantes en milieu alcalin ou Alkali Soluble Emulsions), polyuréthanes, polyéthers, polyesters ou, à base de PVP (polyvinylpyrrolidone).
De manière préférentielle, les suspensions aqueuses de matières minérales selon l'invention sont aussi caractérisées en ce que les épaississants sont choisis parmi les épaississants acryliques de type HASE (Emulsions modifiées hydrophobiquement et épaississantes en milieu alcalin ou Hydrophobically modified Alkali-swellable Emulsions) et les épaississants polyuréthanes.
Un autre objet de l'invention est l'utilisation desdites suspensions dans des formulations aqueuses, en particulier des formulations de revêtements telles que notamment des peintures aqueuses, des crépis, des encres, des enduits, des mastics, des adhésifs, des colles, et d'autres formulations aqueuses incorporant des matières minérales.
Un dernier objet de l'invention réside dans les formulations aqueuses obtenues selon l'invention.
Ainsi, les peintures aqueuses, les crépis, les encres, les enduits, les mastics, les adhésifs , les formulations aqueuses incorporant des matières minérales et les colles selon l'invention se caractérisent en ce qu'ils contiennent les suspensions aqueuses minérales selon l'invention broyées en présence d'épaississants.

### Exemple 1

Cet exemple concerne la fabrication de suspensions aqueuses de matières minérales à travers un procédé de broyage selon l'invention, en présence d'un épaississant (essais n° 1 à 5), et en présence d'un épaississant et d'un agent d'aide au broyage classique (essai n° 6). II concerne aussi les suspensions de matières minérales ainsi obtenues, à partir du procédé de broyage selon l'invention.

Dans les essais n° 1 à 6, on utilise un carbonate de calcium qui est du marbre provenant d'Avenza (Italie), et qui présente un diamètre médian initial noté d₅₀ égal à 10 µm (50 % des particules de carbonate de calcium possèdent un diamètre inférieur ou égal à 10 µm). Il est commercialisé par la société OMYAT^{™} sous le nom Omyacarb^{™}M 10 AV.
- On utilise un broyeur du type Dyno-Mill^{™} à cylindre fixe et impulseur tournant, dont le corps broyant est constitué par des billes à base de zirconium de diamètre compris dans l'intervalle 0,6 millimètre à 1 millimètre.
- Le volume total occupé par le corps broyant est de 1000 centimètres cubes tandis que sa masse est de 2700 g.
- La chambre de broyage a un volume de 1400 centimètres cubes.
- La vitesse circonférentielle du broyeur est de 10 mètres par seconde.
- La suspension de pigment est recyclée à raison de 40 litres par heure.
- La sortie du Dyno-Mill^{™} est munie d'un séparateur de mailles 200 micromètres (microns) permettant de séparer la suspension résultant du broyage et le corps broyant.
- La température lors de chaque essai de broyage est maintenue à environ 30°C.

On commence par mélanger dans l'eau la poudre sèche de carbonate de calcium avec l'épaississant, le mélange étant ensuite broyé au moyen du dispositif précédemment décrit. Le temps de broyage est adapté à la granulométrie souhaitée.

Par la suite, la granulométrie des suspensions est déterminée comme suit

Après le broyage, on récupère dans un flacon un échantillon de la suspension pigmentaire dont la granulométrie est mesurée à l'aide d'un granulomètre Mastersizer^{™} 2000 commercialisé par la société MALYERNT^{™}. On détermine alors le diamètre médian d₅₀ des particules de carbonate de calcium ainsi affinées.

La viscosité Brookfield^{™} des suspensions est déterminée comme suit.
La viscosité Brookfield^{™} de la suspension est mesurée à l'aide d'un viscosimètre - -Brookfield^{™} type RVT, dans le flacon non agité, à une température de 25°C et à deux vitesses de rotation de 10 et 100 tours par minute avec le mobile adéquat. La lecture est effectuée après 1 minute de rotation. On obtient ainsi 2 mesures de viscosité Brookfield^{™} respectivement notées µ₁₀ et µ₁₀₀.
Après une minute d'agitation du flacon resté au repos pendant 8 jours, la viscosité Brookfield^{™} de la suspension est mesurée selon la même méthode.

### Essai n° 1

Cet essai illustre l'invention et met en oeuvre 0,64 % en poids sec par rapport au poids total de la suspension, d'un épaississant acrylique commercialisé par la société COATEX^{™} sous le nom Rheo 2000^{™}. Il met également en oeuvre 64,6 % en poids sec par rapport au poids total de la suspension du carbonate de calcium d'Avenza, et le reste d'eau.

### Essai n° 2

Cet essai illustre l'invention et met en oeuvre 0,60 % en poids sec par rapport au poids total de la suspension, d'un épaississant acrylique commercialisé par la société COATEX^{™} sous le nom Rheo 2000^{™}. Il met également en oeuvre 60,0 % en poids sec par rapport au poids total de la suspension du carbonate de calcium d'Avenza, et le reste d'eau.

### Essai n° 3

Cet essai illustre l'invention et met en oeuvre 0,37 % en poids sec par rapport au poids total de la suspension, d'un épaississant qui est un éther cellulosique commercialisé par la société AQUALON^{™} sous le nom Natrosol^{™} 250 HHR. Il met également en oeuvre 52,6 % en poids sec du carbonate de calcium d'Avenza par rapport au poids total de la suspension, et le reste d'eau.

### Essai n° 4

Cet essai illustre l'invention et met en oeuvre 0,61 % en poids sec par rapport au poids total de la suspension, d'un épaississant polyuréthanne de type HEUR commercialisé par la société COATEX^{™} sous le nom COAPUR^{™} 3025. Il met également en oeuvre 61,0 % en poids sec du carbonate de calcium d'Avenza par rapport au poids total de la suspension, et le reste d'eau.

### Essai n° 5

Cet essai illustre l'invention et met en oeuvre 0,51 % en poids sec par rapport au poids total de la suspension, d'un épaississant polyuréthanne de type HEUR commercialisé par la société COATEX^{™} sous le nom COAPUR^{™} 3025. Il met également en oeuvre 51,5 % en poids sec du carbonate de calcium d'Avenza par rapport au poids total de la suspension, et le reste d'eau.

### Essai n° 6

Cet essai illustre l'invention et met en oeuvre 0,50 % en poids sec par rapport au poids total de la suspension, d'un épaississant acrylique commercialisé par la société, COATEX^{™} sous le nom Rheo 2000^{™}. Il met également en oeuvre 56,7 % en poids sec par rapport au poids total de la suspension du carbonate de calcium d'Avenza. Il met aussi en oeuvre 0,3 % en poids sec par rapport au poids total de la suspension, d'un agent d'aide au broyage qui est un polyacrylate de sodium, et le reste d'eau.

Les caractéristiques des suspensions obtenues à partir des essais n° 1 à n° 6 sont rassemblées dans le tableau 1.

**Tableau 1 : caractéristiques des suspensions aqueuses de carbonate de calcium broyé selon l'invention.**

| | | **Invention** | | | | | |
|---|---|---|---|---|---|---|---|
| **Essai n°** | | **1** | **2** | **3** | **4** | **5** | **6** |
| **CaCO₃** (% en poids sec) | | 64,6 | 60,0 | 52,6 | 61,0 | 51,5 | 56,7 |
| **Epaississant** (% en poids sec) | | 0,64 | 0,60 | 0,37 | 0,61 | 0,51 | 0,50 |
| **Agent d'aide au broyage** (% en poids sec) | | 0 | 0 | 0 | 0 | 0 | 0,30 |
| **d₅₀** (µm) | | 4,9 | 2,0 | 4,7 | 5,2 | 2.3 | 5,3 |
| **Viscosité à T=0** | µ₁₀ (mPa.s) | 2550 | 4740 | 4540 | 4720 | 8800 | 3360 |
| | µ₁₀₀ (mPa.s) | 1580 | 1550 | 1240 | 960 | 1420 | 2210 |
| **Viscosité à T=8 jours** | µ₁₀ (mPa.s) | 1720 | 3880 | 4720 | 6650 | 8250 | 1400 |
| | µ₁₀₀ (mPa.s) | 930 | 1090 | 1470 | 1195 | 2250 | 910 |

Les pourcentages en poids sec s'entendent par rapport au poids total de la suspension.

d₅₀ désigne le diamètre médian des particules de carbonate de calcium après broyage (50 % des particules ont un diamètre inférieur à cette valeur).

T = 0 désigne l'instant initial auquel sont mesurées les viscosités Brookfield^{™} à 10 et 100 tours par minute, notées respectivement µ₁₀ et µ₁₀₀.

T = 8 jours désigne l'instant t=8 jours, auquel sont mesurées après agitation les viscosités Brookfield^{™} à 10 et 100 tours par minute, notées respectivement µ₁₀ et µ₁₀₀.

Les diamètres médians correspondant aux essais n° 1 à n° 6 démontrent que, pour le procédé selon l'invention, les épaississants utilisés se comportent bel et bien comme des agents d'aide au broyage, au sens où on observe une diminution notable de la taille des particules de carbonate de calcium.

Enfin, on constate que chaque suspension obtenue selon l'invention est stable dans le temps.

### Exemple 2

Cet exemple concerne la fabrication de peintures aqueuses, à partir de suspensions aqueuses de carbonate de calcium broyé en présence d'agents épaississants selon l'invention, ou à partir de poudres sèches de carbonate de calcium selon l'art antérieur.

Les peintures sont formulées par le mélange des différents constituants, selon des procédés bien connus de l'homme du métier. La Demanderesse indique que, dans les essais suivants, elle n'a indiqué que la nature des carbonates et des épaississants utilisés. Les peintures contiennent bien entendu un grand nombre d'autres additifs. La liste complète des constituants de chaque peinture, ainsi que leurs proportions, figurent dans les tableaux récapitulatifs.
Pour chaque peinture formulée, on détermine sa viscosité ICI^{™}, Stormer^{™} et Brookfield^{™,} selon les méthodes suivantes.

La viscosité ICI^{™} est déterminée sur un viscosimètre cône-plan, dit viscosimètre ICI^{™}, commercialisé par la société ERICHSEN^{™}, selon la méthode parfaitement connue de l'homme du métier. La mesure est réalisée à 25°C et est notée µ¹ (P).

La viscosité Stormer^{™} est déterminée sur un viscosimètre Stormer^{™} de type KU-1 commercialisé par la société Brookfield^{™}, équipé d'un système de mesures unique. La mesure est réalisée à 25°C et notée µ^{s}(K.U).
La viscosité Brookfield^{™} des peintures est déterminée à 25°C de la même manière que celle indiquée pour l'exemple 1 dans le cas des suspensions de matières minérales. Elle est notée µ^{B}10 (mPa.s) et µ^{B}100 (mPa.s) selon qu'elle est déterminée à 10 et à 100 tours par minute.

### Essai n° 7

Cet essai concerne la formulation d'une peinture mate, selon l'art antérieur, dans laquelle le carbonate est introduit uniquement sous forme de poudre sèche.
Il s'agit ici d'un mélange de 2 carbonates de calcium qui est du marbre provenant d'Avenza (Italie), l'un possédant un diamètre médian de 5 µm (50 % des particules ont un diamètre inférieur à 5 µm) et l'autre un diamètre médian de 2 µm, Ils sont commercialisés par la société OMYA^{™} sous les noms respectifs de Omyacarb^{™} 5-AV et Omyacarb^{™} 2-AV. L'épaississant utilisé est un épaississant acrylique commercialisé par la société COATEX^{™} sous le nom Rheo 2000^{™}.

### Essai n° 8

Cet essai concerne la formulation d'une peinture mate, selon l'invention.
Une partie du carbonate de calcium est introduite sous forme de poudre sèche : il s'agit d'un carbonate de calcium qui est du marbre provenant d'Avenza (Italie), avec un diamètre médian de 5 µm. Il est commercialisé par la société OMYA^{™} sous le nom de Omyacarb^{™} 5-AV.
L'autre partie est introduite sous forme de la suspension aqueuse selon l'invention et décrite dans l'essai n° 1.

### Essai n° 9

Cet essai concerne la formulation d'une peinture mate, selon l'invention.

Une partie du carbonate de calcium est introduite sous forme de poudre sèche : il s'agit d'un carbonate de calcium qui est du marbre provenant d'Avenza (Italie), avec un diamètre médian de 2 µm. Il est commercialisé par la société OMYA^{™} sous le nom de Omyacarb^{™} 2-AV.

L'autre partie est introduite sous forme de la suspension aqueuse selon l'invention et décrite dans l'essai n° 2.

### Essai n° 10

Cet essai concerne la formulation d'une peinture mate, selon l'invention. Une partie du carbonate de calcium est introduite sous forme de poudre sèche : il s'agit d'un mélange de 2 carbonates de calcium qui est du marbre provenant d'Avenza (Italie), l'un possédant un diamètre médian de 5 µm (50 % des particules ont un diamètre inférieur à 5 µm) et l'autre un diamètre médian de 2 µm. Ils sont commercialisés par la société OMYA^{™} sous les noms respectifs de Omyacarb^{™} 5-AV et Omyacarb^{™} 2-AV.

L'autre partie est introduite sous forme de 2 suspensions aqueuses selon l'invention et décrites dans les essais n° 1 et n° 2.

La liste des constituants ainsi que leur proportions en poids sont indiquées dans le tableau 2, pour les peintures correspondant aux essais n° 7 à n° 10.

Pour les peintures correspondant à ces 4 essais, l'homme du métier a travaillé à masse constante de chaque constituant : à ce titre, la masse de carbonate de calcium est identique pour ces essais et égale à 500 g, celle d'agent épaississant est identique et égale à 20 g.

**Tableau 2 : composition des peintures formulées selon les essais 7 à 10.**

| **Constituants** | **Essai n° 7** (Art Antérieur) | **Essai n° 8** (Invention) | **Essai n° 9** (Invention) | **Essai n° 10** (Invention) |
|---|---|---|---|---|
| Suspension de carbonate broyé selon l'essai n° 1 | 0 | 466,1 | 0 | 233,1 |
| Suspension de carbonate broyé selon l'essai n°2 | 0 | 0 | 333,3 | 166,7 |
| Omyacarb^{™} 5-AV | 300,0 | 0 | 300,0 | 150,0 |
| Omyacarb^{™} 2-AV | 200,0 | 200,0 | 0 | 150,0 |
| Tiona^{™} RL 68 | 80,0 | - 80.0 | 80,0 | 80,0 |
| Eau (ajoutée en plus) | 209,3 | 54,5 | 83,4 | 68,6 |
| Rheo 2000^{™} | 20,0 | 10,0 | 13,3 | 11,7 |
| Coatex^{™} P90 | 4,0 | 4,0 | 4,0 | 4,0 |
| Mergal^{™} K6N | 2,0 | 2,0 | 2,0 | 2,0 |
| Nopco^{™} NDW | 2,0 | 2,0 | 2,0 | 2,0 |
| Butyldiglycol | 10,0 | 10,0 | 10,0 | 10,0 |
| White Spirit | 10,0 | 10,0 | 10,0 | 10,0 |
| Ammoniaque | 2,7 | 1,4 | 2,0 | 1,7 |
| Acronal^{™} 290 D | 160,0 | 160,0 | 160,0 | 160,0 |
| Total | 1000,0 | 1000,0 | 1000,0 | 1000,0 |

Les chiffres désignent des masses en poids.
Tiona^{™} RL 68 désigne du dioxyde de titane commercialisé par la société MILLENNIUM^{™}
Coatex^{™} P90 est un dispersant polyacrylique commercialisé par la société COATEX^{™}
Mergal^{™} K6N est un bactéricide commercialisé par la société TROY^{™}
Nopco^{™} NDW est un agent anti-mousse commercialisé par la société COGNIS^{™}
Acronal^{™} 290 D est un liant acrylique commercialisé par la société BASF^{™}

Les valeurs des viscosités ICI^{™}, Stormer^{™} et Brookfield^{™}, mesurées à différents instants, pour les peintures formulées lors des essais 7 à 10 sont résumées dans le tableau 2 bis.

**Tableau 2 bis : viscosités mesurées sur les peintures formulées selon les essais n° 7 à n°10.**

| **Viscosités** | | **Essai n°7 (Art Antérieur)** | **Essai n°8 (Invention)** | **Essai n°9 (Invention)** | **Essai n°10 (Invention)** |
|---|---|---|---|---|---|
| T=0 | µ^{l} (Po) | 2,2 | 2,4 | 2,2 | 2,4 |
| | µ^{S} (K.U) | 87 | 91 | 90 | 95 |
| | µ^{B}₁₀ (mPa.s) | 4400 | 4400 | 4300 | 4600 |
| | µ^{B}₁₀₀ (mPa.s) | 1590 | 1890 | 1850 | 1900 |
| T=24 heures | µ^{I} (Po) | 2,3 | 2.5 | 2,4 | 2,4 |
| | µ^{S} (K.U) | 89 | 95 | 94 | 95 |
| | µ^{B}₁₀ (mPa.s) | 4500 | 4800 | 4700 | 4800 |
| | µ^{B}₁₀₀ (mPa.s) | 1630 | 2010 | 1950 | 2010 |
| T = 7 jours | µ^{B}₁₀ (mPa.s) | 4600 | 5200 | 5300 | 4800 |
| | µ^{B}₁₀₀ (mPa.s) | 1670 | 2080 | 2120 | 1920 |

µ^{I} (Po) : viscosité ICI^{™}
µ^{S}(K.U) : viscosité Stormer^{™}
µ^{B}₁₀ (mPa.s) : viscosité Brookfield^{™} déterminée à 10 tours par minute
µ^{B}₁₀₀ (mPa.s) : viscosité Brookfield^{™} déterminée à 100 tours par minute

Les résultats du tableau 2 bis démontrent que les peintures formulées selon l'invention possèdent un comportement rhéologique amélioré par rapport à l'art antérieur : on observe une augmentation des viscosités ICI^{™} et Stormer^{™}. Cette amélioration conduit à une meilleure qualité d'application des peintures.

D'autre part, les viscosités Brookfield^{™} observées pour les peintures selon l'invention démontrent que ces formulations sont stables dans le temps.

D'autre part, un certain nombre de propriétés optiques ont été déterminées pour les peintures formulées selon les essais n° 7 à n° 10.

Le pouvoir couvrant humide PC des peintures formulées selon les essais n° 7 à n° 10 a été comparé visuellement sur des cartes de contrastes, immédiatement après application au moyen d'un tire-film manuel standard d'une épaisseur de 150 µm desdites peintures.

Les essais n° 8 à n° 10 selon l'invention, démontrent un pouvoir couvrant identique à celui obtenu pour l'essai n° 7 pris comme référence.

Les coordonnées chromatiques L et b figurant dans le tableau 3 appartiennent à l'espace chromatique (L, a, b, Hunter) et sont déterminées sur un film sec de la peinture à tester, préalablement appliquée au moyen d'un tire-film manuel standard en une épaisseur de 150 µm sur une plaque de verre, puis séchée à 23°C pendant 24 heures dans une enceinte climatique à un taux d'humidité de 50 %.

La valeur du rapport de contraste RC (%) = Yₙ / Y_{b} est mesurée sur un spectrocolorimètre Spectro-Pen^{™} commercialisé par la société DR LANGE^{™}. La peinture a été préalablement appliquée au moyen d'un tire-film manuel standard, en une épaisseur de 150 µm sur une carte de contraste. On mesure alors la valeur de la réflectance Y_{b} sur la partie blanche du substrat et la valeur de la réflectance Yₙ sur la partie noire du substrat. La valeur obtenue dans l'espace chromatique (X, Y, Z) est une moyenne réalisée sur trois mesures.

La brillance a été mesurée sur un réflectomètre Micro-Tri-Gloss^{™} commercialisé par la société BRANDT^{™} à des angles égaux à 60° et 85° (BS 60 et BS 85) selon la norme NF T 30-064. La peinture a été préalablement appliquée au moyen d'un tire-film manuel standard, en une épaisseur de 150 µm sur une plaque de verre.

**Tableau 3 : propriétés optiques mesurées sur les peintures formulées selon les essais n° 7 à n° 10.**

| **Propriétés optiques** | **Essai n° 7 (Art Antérieur)** | **Essai n°**8 **(Invention)** | **Essai n°** 9 **(Invention)** | **Essai n° 10 (Invention)** |
|---|---|---|---|---|
| PC | référence | identique à la référence | identique à la référence | identique à la référence |
| L | 97,4 | 97,4 | 97,5 | 97,6 |
| B | 1,1 | 1,2 | 1,1 | 1,05 |
| RC (%) | 97,1 | 97,3 | 97,2 | 97,2 |
| BS 60 | 3,8 | 3,9 | 3,7 | 3,8 |
| BS 85 | 4,0 | 4,0 | 3,9 | 4,1 |

PC : pouvoir couvrant humide estimé visuellement
L : blancheur mesurée sur un spectrocolorimètre Spectro-Pen^{™} commercialisé par la société DR LANGETM
b : sous ton mesuré sur un spectrocolorimètre Spectro-Pen^{™} commercialisé par la société DR LANGE^{™}
RC (%) : rapport de contraste mesuré sur un spectrocolorimètre Spectro-Pen^{™} commercialisé par la société DR LANGE^{™}
BS 60, BS 85 : mesures de brillance à 60 et 85° réalisées sur un réflectomètre mètre Micro-Tri-Gloss^{™}commercialisé par la société BRANDT^{™}, selon la norme NF T 30-064.

Les résultats du tableau 3 démontrent que les propriétés optiques mesurées pour les peintures formulées selon l'invention sont équivalentes à celles de l'art antérieur.

Enfin, pour les essais n° 7 à n° 10, on a déterminé la compatibilité pigmentaire des peintures ainsi formulées, par la mesure du paramètre Delta E (ΔE).

La détermination de la valeur du Delta E (ΔE) de la formulation aqueuse colorée mate est effectuée par ajout, à la base blanche, de 5 % en poids de pigment noir, c'est-à-dire de 50 grammes de pigment noir (COLANYL^{™} Noir commercialisé par la société CLARIANT^{™}) dans 190 grammes de peinture blanche.

Ce test de mesure de ΔE est celui dénommé « essai de gommage au doigt », connu par l'homme du métier sous le vocable « rub out ».

Ce test consiste à appliquer sans cisaillement, à l'aide d'un filmographe, 150 micromètres de la formulation de la peinture mate ou satinée colorée à tester sur une carte de contraste, c'est-à-dire lentement et sans contrainte et à attendre 45 secondes puis à appliquer un cisaillement par frottement, avec le doigt, du film encore visqueux de peinture, pendant trente secondes en un endroit quelconque.

Après séchage du film, la différence colorimétrique entre la zone cisaillée (zone frottée) et la zone non cisaillée (zone du film non frotté) déterminée au moyen du spectrophotomètre Spectro-Pen^{™}, permet d'évaluer (valeur du ΔE) si la composition de peinture testée présente ou non une bonne compatibilité pigmentaire.

Les valeurs de ΔE déterminées pour les formulations colorées réalisées à partir des peintures correspondant aux essais n° 7 à n° 10 sont indiquées dans le tableau 4.

**Tableau 4 : valeurs de ΔE mesurées pour différentes formulations colorées réalisées à partir des bases blanches correspondant aux essais n° 7 à n° 10.**

| **Formulations colorées réalisées à partir de la base blanche de l'essai :** | **n°** 7 **(Art Antérieur)** | **n°** 8 **(Invention)** | **n° 9 (Invention)** | **n° 10 (Invention)** |
|---|---|---|---|---|
| ΔE | 0,6 | 0,5 | 0,4 | 0,5 |

Les valeurs du tableau 4 démontrent que la compatibilité pigmentaire des peintures colorées formulées selon l'invention reste identique à celle correspondant à l'essai selon l'art antérieur.

### Essai n° 11

Cet essai concerne la formulation d'une peinture satinée, selon l'art antérieur, dans laquelle le carbonate est introduit uniquement sous forme de poudre sèche.
Il s'agit ici d'un carbonate de calcium qui est du marbre provenant d'Avenza (Italie), possédant un diamètre médian de 2 µm. Il est commercialisé par la société OMYA^{™} sous le nom de Omyacarb^{™} 2-AV.
L'épaississant utilisé est un épaississant polyuréthane de type HEUR commercialisé par la société COATEX^{™} sous le nom Coapur^{™} 3025.

### Essai n° 12

Cet essai concerne la formulation d'une peinture satinée, selon l'invention.
Le carbonate de calcium est introduit sous forme de la suspension aqueuse selon l'invention et décrite dans l'essai n° 5.

La liste des constituants ainsi que leur proportions en poids sont indiquées dans le tableau 5, pour les peintures correspondant aux essais n° 11 et n° 12.

Pour les peintures correspondant à ces 2 essais, le formulateur a travaillé à masse constante de chaque constituant : à ce titre, la masse de carbonate de calcium est identique pour ces essais et égale à 150 g, celle d'épaississant est identique et égale à 20 g.

**Tableau 5 : composition des peintures formulées selon les essais n° 11 et n° 12..**

| **Constituants** | **Essai n°11 (Art Antérieur)** | **Essai n°12 (Invention)** |
|---|---|---|
| Suspension de carbonate broyé selon l'essai n°5 | 0 | 291,3 |
| Omyacarb^{™} 2-AV | 150,0 | 0 |
| Tiona^{™} RL 68 | 200,0 | 200,0 |
| Eau (ajoutée en plus) | 90,0 | 0 |
| Coapur^{™} 3025 | 20,0 | 14,0 |
| Coatex^{™} BR3 | 4,0 | 4,0 |
| Mergal^{™} K6N | 2,0 | 2,0 |
| Nopco^{™}NDW | 1,0 | 1,0 |
| Butyldiglycol | 15,0 | 15,0 |
| Ammoniaque | 3,2 | 3,2 |
| Tego Foamex^{™} 1488 | 1,0 | 1,0 |
| Texanol^{™} | 15,0 | 15,0 |
| Acronal^{™} 290 D | 440,0 | 440,0 |
| Total | 1000,0 | 1000,0 |

Les chiffres désignent des masses en poids.
Tiona^{™} RL 68 désigne du dioxyde de titane commercialisé par la société MILLENNIUM^{™}
Coatex^{™} P90 est un dispersant polyacrylique commercialisé par la société COATEX^{™}
Mergal^{™} K6N est un bactéricide commercialisé par la société TROY^{™}
Nopco^{™} NDW est un agent anti-mousse commercialisé par la société COGNIS^{™}
Tego Foamex^{™} 1488 est un agent antimousse commercialisé par la société TEGO CHEMIE^{™}
Texanol^{™} est un agent de coalescence commercialisé par la société EASTMAN KODAK^{™}
Acronal^{™} 290 D est un liant acrylique commercialisé par la société BASF^{™}

Les valeurs des viscosités ICI^{™}, Stormer^{™} et Brookfield^{™}, mesurées à différents instants, pour les peintures formulées lors des essais n° 11 et n° 12 sont résumées dans le tableau 5 bis.

**Tableau 5 bis : viscosités mesurées sur les peintures formulées selon les essais n° 11 et n° 12.**

| **Viscosités** | | **Essai n°11 (Art Antérieur)** | **Essai n°12 (Invention)** |
|---|---|---|---|
| T=0 | µ^{l} (Po) | 2,3 | 2,4 |
| | µ^{S}(K.U) | 94 | 96 |
| | µ^{B}₁₀ (mPa.s) | 4400 | 4600 |
| | µ^{B}₁₀₀ (mPa.s) | 1900 | 2010 |
| T = 24 heures | µ^{I} (Po) | 2,5 | 2,7 |
| | µ^{S} (K.U) | 103 | 107 |
| | µ^{B}₁₀ (mPa.s) | 6800 | 6900 |
| | µ^{B}₁₀₀ (mPa.s) | 2790 | 2930 |

µ¹ (Po) : viscosité ICI^{™}
µ^{s}(K.U) : viscosité Stormer^{™}
µ^{B}₁₀ (mPa.s) : viscosité Brookfield^{™} déterminée à 10 tours par minute
µ^{B}₁₀₀ (mPa.s) : viscosité Brookfield^{™} déterminée à 100 tours par minute

Les résultats du tableau 5 bis démontrent que la peinture formulée selon l'invention possède un comportement rhéologique amélioré par rapport à l'art antérieur : on observe une augmentation des viscosités ICI^{™} et Stormer^{™}. Cette amélioration conduit à une meilleure qualité d'application des peintures.
D'autre part, les viscosités Brookfield^{™} observées pour les peintures selon l'invention démontrent que ces formulations sont stables dans le temps.

### Essai n° 13

Cet essai concerne la formulation d'une peinture mate, selon l'art antérieur.
Une partie du carbonate de calcium est introduite sous forme de poudre sèche : il s'agit d'un carbonate de calcium qui est du marbre d'Avenza, avec un diamètre médian de 2 µm. Il est commercialisé par la société OMYA^{™} sous le nom de Omyacarb^{™} 2-AV.

L'autre partie est introduite sous forme d'une suspension aqueuse de carbonate de calcium qui est du marbre d'Avenza, avec un diamètre médian initial de 10 µm. Cette suspension est obtenue à partir d'un procédé de broyage selon l'art antérieur, en présence de 0,3 % en poids sec d'un agent de broyage classique qui est un polyacrylate de sodium. La suspension obtenue présente une concentration en matière sèche égale à 75 % de son poids total, et le carbonate de calcium ainsi affiné et contenu dans la suspension possède un diamètre médian de 5 µm.

### Essai n° 14

Cet essai concerne la formulation d'une peinture mate, selon l'invention.

Une partie du carbonate de calcium est introduite sous forme de poudre sèche : il s'agit d'un carbonate de calcium qui est du marbre d'Avenza, avec un diamètre médian de 2 µm. Il est commercialisé par la société OMYA^{™} sous le nom de Omyacarb^{™} 2-AV.

L'autre partie est introduite sous forme de la suspension aqueuse de l'essai n° 6.

La liste des constituants ainsi que leurs proportions en poids sont indiquées dans le tableau 6, pour les peintures correspondant aux essais 13 et 14.

Pour les peintures correspondant à ces 2 essais, le formulateur a travaillé à masse constante de chaque constituant : à ce titre, la masse de carbonate de calcium est identique pour ces essais et égale à 500 g, celle de liant est identique et égale à 160 g.

**Tableau 6 : composition des peintures formulées selon les essais n° 13 et n° 14.**

| **Constituants** | **Essai n°13 (Art Antérieur)** | **Essai n°14 (Invention)** |
|---|---|---|
| Suspension de carbonate broyé selon l'essai n°6 | 0 | 518,7 |
| Suspension de carbonate broyé en présence de polyacrylate de sodium (art antérieur) | 400,0 | 0 |
| Omyacarb^{™} 2-AV | 200,0 | 200,0 |
| Tiona^{™}RL 68 | 80,0 | 80,0 |
| Eau (ajoutée en plus) | 113,3 | 3,3 |
| Rheo 2000^{™} | 20,0 | 11,3 |
| Mergal^{™} K6N | 2,0 | 2,0 |
| Acronal^{™} 290 D | 160,0 | 160,0 |
| Nopco^{™} NDW | 2,0 | 2,0 |
| Butyldiglycol | 10,0 | 10,0 |
| White Spirit | 10,0 | 10,0 |
| Ammoniaque | 2,7 | 2,7 |
| Total | 1000,0 | 1000,0 |

Les chiffres désignent des masses en grammes.
ES désigne l'extrait sec, soit la fraction en poids de matière sèche en %
Tiona^{™} RL 68 désigne du dioxyde de titane commercialisé par la société MILLENNIUM^{™}
Coatex^{™} P90 est un dispersant polyacrylique commercialisé par la société COATEX^{™}
Mergal^{™} K6N est un bactéricide commercialisé par la société TROY^{™}
Nopco^{™} NDW est un agent anti-mousse commercialisé par la société COGNIS^{™}
Acronal^{™} 290 D est un liant acrylique commercialisé par la société BASF^{™}

Les valeurs des viscosités ICI^{™}, Stormer^{™} et Brookfield^{™} mesurées à différents instants, pour les peintures formulées lors des essais n°13 et n°14 sont résumées dans le tableau 6 bis.

**Tableau 6 bis : viscosités mesurées sur les peintures formulées selon les essais n° 13 et n° 14.**

| **Viscosités** | | **Essai n°13 (Art Antérieur)** | **Essai n°14 (Invention)** |
|---|---|---|---|
| T=0 | µ^{l} (p) | 2,2 | 2,8 |
| | µ^{S}(K.U) | 89 | 90 |
| | µ^{B}₁₀ (mPa.s) | 5500 | 5600 |
| | µ^{B}100(mPa.s) | 1640 | 1760 |
| T = 24 heures | µ^{I} (P) | 2,4 | 2,7 |
| | µ^{S}(K.U) | 92 | 99 |
| | µ^{B}₁₀ (mPa.s) | 5500 | 6400 |
| | µ^{B}₁₀₀(mPa.s) | 1870 | 2300 |
| T = 7 jours | µ^{B}₁₀ (mPa.s) | 5700 | 6500 |
| | µ^{B}₁₀₀ (mPa.s) | 1850 | 1950 |
| T = 1 mois | µ^{B}₁₀ (mPa.s) | 5700 | 6200 |
| | µ^{B}₁₀₀ (mPa.s) | 1780 | 1900 |

µ^{I} (P) : viscosité ICI^{™}
µ^{S}(K.U) : viscosité Stormer^{™}
µ^{B}₁₀ (mPa.s) : viscosité Brookfield^{™} déterminée à 10 tours par minute
µ^{B}₁₀₀ (mPa.s) : viscosité Brookfield^{™} déterminée à 100 tours par minute

Les résultats du tableau 6 bis démontrent que la peinture formulée selon l'invention possède un comportement rhéologique amélioré par rapport à l'art antérieur : on observe une augmentation des viscosités ICI^{™} et Stormer^{™}. Cette amélioration conduit à une meilleure qualité d'application des peintures.
D'autre part, les viscosités Brookfield^{™} observées pour la peinture selon l'invention démontrent que cette formulation est stable dans le temps.

### Exemple 3

Cet exemple concerne la fabrication de suspensions aqueuses de matières minérales à travers un procédé de broyage selon l'invention, en présence d'un épaississant (essais n° 15 et 17 à 19), ou d'un mélange de deux épaississants (essai n° 16). Il concerne aussi les suspensions de matières minérales ainsi obtenues, à partir du procédé de broyage selon l'invention.

Dans les essais n° 15 à 18, on utilise un carbonate de calcium qui est du marbre provenant d'Avenza (Italie), et qui présente un diamètre médian initial noté d₅₀ égal à 10 µm (50 % des particules de carbonate de calcium possèdent un diamètre inférieur ou égal à 10 µm). Il est commercialisé par la société OMYA^{™} sous le nom Omyacarb^{™} 10 AV.

Dans l'essai n° 19, on utilise un carbonate de calcium précipité, qui présente un diamètre médian initial noté d₅₀ égal à 4,8 µm (50 % des particules de carbonate de calcium possèdent un diamètre inférieur ou égal à 4,8 µm). Il est commercialisé par la société SOLVAY^{™} sous le nom Socal^{™} P3.

Les matières minérales sont broyées selon le procédé selon l'invention tel que décrit dans l'exemple 1.

Pour les essais n° 15 à 19, la granulométrie des suspensions aqueuses est déterminée, après broyage, de la même manière que celle décrite pour l'exemple 1.
On détermine ensuite, selon la même méthode que celle employée au cours de l'exemple 1, les viscosités Brookfield^{™} à deux vitesses de rotation de 10 et 100 tours par minute -respectivement notées µ₁₀ et µ₁₀₀- et ce, aux instants t = 0 et t = 8 jours après une minute d'agitation.

### Essai n° 15

Cet essai illustre l'invention et met en oeuvre 0,25 % en poids sec par rapport au poids total de la suspension, d'un épaississant acrylique de type ASE commercialisé par la société COATEX^{™} sous le nom Viscoatex^{™} V46. Il met également en oeuvre 50,0 % en poids sec par rapport au poids total de la suspension du carbonate de calcium d'Avenza, et le reste d'eau.

### Essai n° 16

Cet essai illustre l'invention et met en oeuvre 0,25 % en poids sec par rapport au poids total de la suspension, d'un épaississant acrylique de type HASE commercialisé par la société COATEX^{™} sous le nom Rheo 2000^{™} et 0,25 % en poids sec par rapport au poids total de la suspension, d'un épaississant polyuréthanne de type HEUR commercialisé par la société COATEX^{™} sous le nom Coapur^{™} 2025. Il met également en oeuvre 50,0 % en poids sec par rapport au poids total de la suspension du carbonate de calcium d'Avenza, et le reste d'eau.

### Essai n° 17

Cet essai illustre l'invention et met en oeuvre 0,10 % en poids sec par rapport au poids total de la suspension, d'un épaississant acrylique de type ASE commercialisé par la société COATEX^{™} sous le nom Rheo 2000^{™}. Il met également en oeuvre 20,0 % en poids sec par rapport au poids total de la suspension du carbonate de calcium d'Avenza, et le reste d'eau.

### Essai n° 18

Cet essai illustre l'invention et met en oeuvre 0,25 % en poids sec par rapport au poids total de la suspension, d'un épaississant polyéther commercialisé par la société AQUALON^{™} sous le nom Aquaflow^{™} NHS 300. Il met également en oeuvre 50,0 % en poids sec par rapport au poids total de la suspension du carbonate de calcium d'Avenza, et le reste d'eau.

### Essai n° 19

Cet essai illustre l'invention et met en oeuvre 0,25 % en poids sec par rapport au poids total de la suspension, d'un épaississant polyuréthanne de type HEUR commercialisé par la société COATEX^{™} sous le nom Coapur^{™} 2025. Il met également en oeuvre 50,0 % en poids sec par rapport au poids total de la suspension du carbonate de calcium précipité Socal^{™} P3, et le reste d'eau.

Les valeurs des diamètres médians d₅₀ déterminés après broyage, ainsi que les valeurs des viscosités Brookfield^{™} µ₁₀ et µ₁₀₀, mesurées après broyage aux instants t = 0 et t = 8 jours après une minute d'agitation, sont indiquées dans le tableau 7.

**Tableau 7 : diamètre médian d₅₀ après broyage, et viscosités Brookfield^{™} µ₁₀ et µ₁₀₀, après broyage (aux instants t = 0 et t = 8 jours après une minute d'agitation)**

| | | **Invention** | | | | |
|---|---|---|---|---|---|---|
| **Essai n°** | | **15** | **16** | **17** | **18** | **19** |
| **Carbonate de calcium** (% en poids sec) | | 50 | 50 | 20 | 50 | 50 |
| **Epaississant** (% en poids sec) | | 0,25 | 0,50 | 0,10 | 0,25 | 0,25 |
| **d₅₀** (µm) | | 5,6 | 4,9 | 2,5 | 4,3 | 2,1 |
| **Viscosité à T=0** | µ₁₀ (mPa.s) | 60 | 50 | 40 | 800 | 1630 |
| | µ₁₀₀ (mPa.s) | 73 | 30 | 10 | 110 | 250 |
| **Viscosité à T=8 jours** | µ₁₀ (mPa.s) | 110 | 45 | 40 | 760 | 3120 |
| | µ₁₀₀ (mPa.s) | 90 | 30 | 10 | 175 | 110 |

Les diamètres médians correspondant aux essais n° 15 à n° 19 démontrent que, pour le procédé selon l'invention, les épaississants utilisés se comportent bel et bien comme des agents d'aide au broyage, au sens où on observe une diminution notable de la taille des particules de carbonate de calcium.

Enfin, on constate que chaque suspension obtenue selon l'invention est stable dans le temps.

### Exemple 4

Cet exemple illustre l'invention et concerne la fabrication d'un crépi, d'un enduit et d'une colle selon l'invention.

### Essai n° 20

Cet essai illustre l'invention et concerne la fabrication d'un crépi selon l'invention.
Pour ce faire, on réalise donc un crépi, selon les méthodes bien connues de l'homme du métier, et dont la composition est donnée dans le tableau 8.
Cet essai met notamment en oeuvre la suspension aqueuse de matière minérale broyée selon l'invention, et obtenue au cours de l'essai n° 15.

**Tableau 8 : composition d'une formulation crépi selon l'invention**

| **Constituants** | **Poids (g)** |
|---|---|
| Suspension aqueuse de matière minérale selon l'essai n° 15 | 259,5 |
| Coatex^{™} P90 | 3,0 |
| Mergal^{™} K6N | 2,0 |
| TiO2 RL68 | 60,0 |
| Hydrocarb^{™} | 35,0 |
| Durcal^{™} 130 | 110,0 |
| Rhodopas^{™} DS 910 (50%) | 200,0 |
| Monoéthylèneglycol | 10,0 |
| White Spirit | 10,0 |
| Granicalcium^{™} | 300,0 |
| Ammoniaque | 2,5 |
| Viscoatex^{™} 46 | 18,0 |

Coatex^{™} P90 est un dispersant acrylique commercialisé par la société COATEX^{™}
Mergal^{™} K6N est un biocide commercialisé par la société TROY^{™}
TiO2 RL 68 est du dioxyde de titane commercialisé par la société MILLENIUM^{™}
Hydrocarb^{™} et Durcal^{™}130 sont des carbonates de calcium commercailisés par la société OMYA^{™}
Rhodopas^{™} DS 910 est un liant styrène acrylique commercialisé par la société RHODIA^{™}
Viscoatex^{™} 46 est un épaississant acrylique commercialisé par la société COATEX^{™}

On obtient ainsi une formulation, dont les viscosités Brookfield^{™} mesurées à 1, 10 et 100 tours par minute (selon les méthodes précédemment décrites), sont respectivement égales, à l'instant t = 0, à :
600 000 mPa.s, 115 000 mPa.s, 15 000 mPa.s.
Ces viscosités, mesurées à l'instant t = 24 heures, sont respectivement égales à :
400 000 mPa.s, 82 000 mPa.s, 14 500 mPa.s.

Ces valeurs démontrent que les viscosités Brookfield^{TM} obtenues sont parfaitement compatibles avec une utilisation de la formulation selon l'invention dans le domaine des crépis.

### Essai n° 21

Cet essai illustre l'invention et concerne la fabrication d'un enduit selon l'invention. Pour ce faire, on réalise donc un enduit, selon les méthodes bien connues de l'homme du métier, et dont la composition est donnée dans le tableau 9.
Cet essai met notamment en oeuvre la suspension aqueuse de matière minérale broyée selon l'invention, et obtenue au cours de l'essai n° 15.

**Tableau 9 : composition d'une formulation d'enduit selon l'invention**

| **Constituants** | **Poids (g)** |
|---|---|
| Suspension aqueuse de matière minérale selon l'essai n° 15 | 798,4 |
| Nopco^{™} NDW | 2,0 |
| Mergal^{™} K6N | 0,6 |
| Myanit^{™} | 120,0 |
| Acronal^{™} 290D (50%) | 12,0 |
| Soude 20% | 20,0 |
| Viscoatex^{™} 46 (32%) | 70,0 |

Nopco^{™} NDW est un antimousse commercialisé par la société COGNIS^{™}
Mergal^{™} K6N est un biocide commercialisé par la société TROY^{™}
Myanit^{™} est un carbonate de calcium commercialisé par la société OMYA^{™}
Acronal^{™} 290 D est un liant styrène acrylique commercialisé par la société BASF^{™}

On obtient ainsi une formulation, dont les viscosités Brookfield^{™} mesurées à 1, 10 et 100 tours par minute (selon les méthodes précédemment décrites mais dans ce cas, avec un module de type Hélipath^{™}), sont respectivement égales, à l'instant t = 0, à : 440 000 mPa.s, 59 000 mPa.s, 18 000 mPa.s.
Ces viscosités, mesurées à l'instant t=24 heures, sont respectivement égales à :
570 000 mPa.s, 70 000 mPa.s, 20 500 mPa.s.

Ces valeurs démontrent que les viscosités Brookfield^{TM} obtenues sont parfaitement compatibles avec une utilisation de la formulation selon l'invention dans le domaine des enduits.

### Essai n° 22

Cet essai illustre l'invention et concerne la fabrication d'une colle selon l'invention. Pour ce faire, on réalise donc une colle, selon les méthodes bien connues de l'homme du métier, et dont la composition est donnée dans le tableau 10.
Cet essai met notamment en oeuvre la suspension aqueuse de matière minérale broyée selon l'invention, et obtenue au cours de l'essai n° 15.

**Tableau 10 : composition d'une formulation de colle selon l'invention**

| **Constituants** | **Poids (g)** |
|---|---|
| Suspension aqueuse de matière minérale selon l'essai n° 15 | 199,6 |
| Mergal^{™} K6N | 2,0 |
| Nopco^{™} NDW | 1,0 |
| Rhodopas^{™} DS 910 (50%) | 160,0 |
| Durcal^{TM} 2 | 140,0 |
| Durcal^{TM} 130 | 524,4 |
| Butyldiglycol | 14,0 |
| Ammoniaque | 10,0 |
| Viscoatex^{™} 46 | 70,0 |

Nopco^{™} NDW est un antimousse commercialisé par la société COGNIS^{™}
Rhodopas^{™} DS 910 est un liant styrène acrylique commercialisé par la société RHODIA^{™}
Durcal^{™} 2 et Durcal^{™} 130 sont des carbonates de calcium commercialisés par la société OMYA^{™}
Viscoatex^{™} 46 est un épaississant acrylique commercialisé par la société COATEX^{™}

On obtient ainsi une formulation, dont les viscosités Brookfield^{TM} mesurées à 1, 10 et 100 tours par minute (selon les méthodes précédemment décrites mais dans ce cas, avec un module de type Hélipath^{™}), sont respectivement égales, à l'instant t = 0, à : 975 000 mPa.s, 210 000 mPa.s, 42 000 mPa.s.
Ces viscosités, mesurées à l'instant t=24 heures, sont respectivement égales à :
1 070 000 mPa.s, 350 000 mPa.s, 94 000 mPa.s.
Ces valeurs démontrent que les viscosités Brookfield^{TM} obtenues sont parfaitement compatibles avec une utilisation de la formulation selon l'invention dans le domaine des colles.

## Revendications

1. Procédé de fabrication d'une suspension stable de matières minérales dans l'eau, **caractérisé en ce que** lesdites matières minérales sont broyées en présence d'épaississants, et sans agent dispersant.

2. Procédé selon la revendication 1 **caractérisé en ce que** les matières minérales sont un pigment et/ou une charge minérale choisi parmi le carbonate de calcium synthétique ou naturel, les dolomies, le kaolin, le talc, le gypse, la chaux, la magnésie, le dioxyde de titane, le blanc satin, le trioxyde d'aluminium ou encore le trihydroxyde d'aluminium, le mica, les oxydes de zinc et de fer, le sulfate de baryum et le mélange de ces charges entre elles, comme les mélanges talc-carbonate de calcium, carbonate de calcium-kaolin, ou encore les mélanges de carbonate de calcium avec le trihydroxyde d'aluminium ou le trioxyde d'aluminium, ou encore les mélanges avec des fibres synthétiques ou naturelles ou encore les co-structures des minéraux comme les co-structures talc-carbonate de calcium ou talc-dioxyde de titane, ou leurs mélanges.

3. Procédé selon la revendication 2 **caractérisé en ce que** les matières minérales sont du carbonate de calcium synthétique ou naturel, du dioxyde de titane, ou leurs mélanges.

4. Procédé selon la revendication 3 **caractérisé en ce que** les matières minérales sont un carbonate de calcium synthétique ou un carbonate de calcium naturel choisi parmi le marbre, la calcite, la craie ou leurs mélanges.

5. Procédé selon l'une des revendications 1 à 4 **caractérisé en ce que** les épaississants sont choisis parmi les épaississants naturels, et en particulier choisis parmi les gommes naturelles, les CMC (Carboxyméthylcelluloses) et les HEC (Hydroxyéthylcelluloses), ou choisis parmi les épaississants synthétiques, et en particulier choisis parmi les gommes synthétiques, les épaississants acryliques de type HASE (Emulsions modifiées hydrophobiquement et épaississantes en milieu alcalin ou Hydrophobically modified Alkali-swellable Emulsions) ou ASE (Emulsions épaississantes en milieu alcalin ou Alkali Soluble Emulsions), polyuréthanes, polyéthers, polyesters ou à base de PVP (polyvinylpyrrolidone).

6. Procédé selon la revendication 5 **caractérisé en ce que** les épaississants sont choisis parmi les épaississants acryliques de type HASE (Emulsions modifiées hydrophobiquement et épaississantes en milieu alcalin ou Hydrophobically modified Alkali-swellable Emulsions) et les épaississants polyuréthanes.

7. Procédé selon l'une des revendications 1 à 6 **caractérisé en ce qu'**il est de plus mis en oeuvre au moins un agent d'aide au broyage.

8. Procédé selon l'une des revendications 1 à 7 **caractérisé en ce qu'**il met en oeuvre au moins 15 % en poids sec de matières minérales par rapport au poids total de la suspension aqueuse, de 0,01 % à 5 % en poids sec d'épaississants par rapport au poids total de la suspension aqueuse, et de 0 à 5 % en poids sec d'agents d'aide au broyage par rapport au poids total de la suspension aqueuse.

9. Procédé selon la revendication 8 **caractérisé en ce qu'**il met en oeuvre au moins 30 % en poids sec de matières minérales par rapport au poids total de la suspension aqueuse, de 0,5 % à 1,5 % % en poids sec d'épaississants par rapport au poids total de la suspension aqueuse, et de 0 à 2 % en poids sec d'agents d'aide au broyage par rapport au poids total de la suspension aqueuse.

10. Procédé selon la revendication 9 **caractérisé en ce qu'**il met en oeuvre au moins 50 % en poids sec de matières minérales par rapport au poids total de la suspension aqueuse, de 0,5 % à 1,5 % % en poids sec d'épaississants par rapport au poids total de la suspension aqueuse, et ne met pas en oeuvre d'agents d'aide au broyage.

## Claims

1. A process for manufacture of a stable suspension of mineral matter in water, **characterised in that** the said mineral matter is ground in the presence of thickening agents, and without a dispersing agent.

2. A process according to claim 1 **characterised in that** the mineral matter is a pigment and/or a mineral filler, chosen from among synthetic or natural calcium carbonate, the dolomites, kaolin, talc, gypsum, lime, magnesia, titanium dioxide, satin white, aluminium trioxide, or again aluminium trihydroxide, mica, zinc and iron oxides, barium sulphate, and a blend of these fillers one with another, such as talc and calcium carbonate blends, calcium carbonate and kaolin blends, or again blends of calcium carbonate with aluminium trihydroxide or aluminium trioxide, or again blends with synthetic or natural fibres, or again mineral co-structures such as talc and calcium carbonate co-structures, or talc and titanium dioxide co-structures, or their blends.

3. A process according to claim 2 **characterised in that** the mineral matter is synthetic or natural calcium carbonate, titanium dioxide, or their blends.

4. A process according to claim 3 **characterised in that** the mineral matter is a synthetic calcium carbonate or a natural calcium carbonate chosen from among marble, calcite, chalk or their blends.

5. A process according to one of the claims 1 to 4 **characterised in that** the thickening agents are chosen from among the natural thickening agents, and in particular chosen from among the natural gums, CMCs (Carboxymethylcelluloses) and HECs (Hydroxyethylcelluloses), or chosen from among the synthetic thickening agents, and in particular chosen from among the synthetic gums, the acrylic thickening agents of the HASE type (Hydrophobically Modified Alkali-Swellable Emulsions) or ASE type (Alkali Soluble Emulsions), polyurethanes, polyethers, polyesters or those having a PVP (polyvinylpyrrolidone) base.

6. A process according to claim 5 **characterised in that** the thickening agents are chosen from among the acrylic thickening agents of the HASE type (Hydrophobically modified Alkali-Swellable Emulsions) and the polyurethane thickeners agents.

7. A process according to one of the claims 1 to 6 **characterised in that**, in addition, at least one grinding aid agent is used.

8. A process according to one of the claims 1 to 7 **characterised in that** at least 15% by dry weight of mineral matter relative to the total weight of the aqueous suspension, 0.01% to 5% by dry weight of thickening agents relative to the total weight of the aqueous suspension, and 0 to 5% by dry weight of grinding aid agents relative to the total weight of the aqueous suspension are used.

9. A process according to claim 8 **characterised in that** at least 30% by dry weight of mineral matter relative to the total weight of the aqueous suspension, 0.5% to 1.5% by dry weight of thickening agents relative to the total weight of the aqueous suspension, and 0 to 2% by dry weight of grinding aid agents relative to the total weight of the aqueous suspension are used.

10. A process according to claim 9 **characterised in that** at least 50% by dry weight of mineral matter relative to the total weight of the aqueous suspension, 0.5% to 1.5% by dry weight of thickening agents relative to the total weight of the aqueous suspension, and no use grinding aid agents are used.

## Patentansprüche

1. Verfahren zur Herstellung **dadurch**, dass die genannten Mineralstoffe mit Dickungsmitteln und ohne Dispersionsmittel zerstoßen werden.

2. Verfahren nach Anspruch 1, **gekennzeichnet dadurch, dass** die Mineralstoffe aus einem Pigment und/oder einer Mineralladung bestehen, die wiederum aus synthetischem oder natürlichem Kalziumcarbonat, Dolomiten, Koalin, Talk, Gips, Magnesia, Titandioxid, weißglänzender Emulsion, Aluminiumtrioxyd oder Aluminiumoxidtrihydrat, Glimmer, Zink- und Eisenoxiden, Bariumsulfat und deren Mischungen, wie z.B. Mischungen aus Kalzium-Talkcarbonat, Kalzium-Kaolincarbonat oder Mischungen aus Kalziumcarbonat mit Aluminiumoxidtrihydrat oder Aluminiumtrioxyd oder den Mischungen aus synthetischen oder natürlichen Fasern oder den Co-Strukturen von Mineralen wie den Co-Strukturen Kalzium-Talkcarbon oder titan-Talkdioxid oder deren Mischungen bestehen.

3. Verfahren nach Anspruch 2, **gekennzeichnet dadurch, dass** die Mineralstoffe aus synthetischem oder natürlichem Kalziumcarbonat, aus Titandioxid oder deren Mischungen bestehen.

4. Verfahren nach Anspruch 3, **gekennzeichnet dadurch, dass** die Mineralstoffe aus einem synthetischen Kalziumcarbonat oder einem natürlichen Kalziumcarbonat wie z.B. Marmor, Kalkspat, Kreide oder deren Mischungen besteht.

5. Verfahren nach einem der Ansprüche 1 bis 4, **gekennzeichnet dadurch, dass** die Dickungsmittel aus natürlichen Dickungsmitteln bestehen, insbesondere aus natürlichen Gummiarten, den CMC (Carboxymethylcellulosen) sowie den HEC (Hydroxyethylcellulosen) oder aus synthetischen Dickungsmitteln und insbesondere aus synthetitschen Gummiarten, den acrylhaltigen Dickungsmitteln insbesondere HASE (Hydrophobisch modifizierte Emulsionen in alkalischem Medium oder Hydrophobically modified Alkali-swellable Emulsions) oder ASE (Verdickende Emulsionen in alkalischem Medium oder Alkali Soluble Emulsions), Polyurethane, Polyethern, Polyestern oder aus PVP (Polyvinylpyrrolidon).

6. Verfahren nach Anspruch 5, **gekennzeichnet dadurch, dass** die Dickungsmittel aus akrylhaltigen Dickungsmitteln wie z.B. HASE (Hydrophobisch modifizierte Emulsionen in alkalischem Medium oder Hydrophobically modified Alkali-swellable Emulsions) und den Polyurethan-Dickungsmitteln bestehen.

7. Verfahren nach einem der Ansprüche 1 bis 6, **gekennzeichnet dadurch, dass** zusätzlich mindestens ein Stoff mittels Zerkleinerung hinzugefügt wird.

8. Verfahren nach einem der Ansprüche 1 bis 7, **gekennzeichnet dadurch, dass** mindestens 15 % Trockengewicht an Mineralstoffen im Verhältnis zum Gesamtgewicht der wässrigen Lösung, 0,01% bis 5% Trockengewicht der Dickungsmittel im Verhältnis zum Gesamtgewicht der wässerigen Lösung und 0 bis 5 % Trockengewicht mittels Zerkleinerung im Verhältnis zum Gesamtgewicht der wässrigen Lösung eingesetzt werden.

9. Verfahren nach Anspruch 8, **gekennzeichnet dadurch, dass** mindestens 30 % Trockengewicht der Mineralstoffe im Verhältnis zum Gesamtgewicht der wässrigen Lösung, 0,5 % bis 1,5 % Trockengewicht Verdickungsmittel im Verhältnis zum Gesamtgewicht der wässrigen Lösung und 0 bis 2% Trockengewicht des Stoffes mittels Zerkleinerung im Verhältnis zum Gesamtgewicht der wässrigen Lösung eingesetzt werden.

10. Verfahren nach Anspruch 9, **gekennzeichnet dadurch, dass** mindestens 50 % Trockengewicht der Mineralstoffe im Verhältnis zum Gesamtgewicht der wässrigen Lösung, 0,5 % bis 1,5 % Trockengewicht an Dickungsmittel im Verhältnis zum Gesamtgewicht der wässrigen Lösung und keine Stoffe mittels Zerkleinerung eingesetzt werden.
